# EUROPÄISCHE PATENTSCHRIFT

(11) **EP 1 736 344 B1**
(45) Veröffentlichungstag und Bekanntmachung des Hinweises auf die Patenterteilung: **09.09.2009**
(21) Anmeldenummer: 06012206.6
(22) Anmeldetag: 14.06.2006
(51) Int. Cl.: B60J 9/02

(54) **Dach- bzw. Notausstiegsluke in Fuktionseinheit**
Accessory unit including emergency roof hatch
Unité d'accessoires comprenant une trappe de toit de secours

(30) Priorität: 22.06.2005 DE 102005028853
(43) Veröffentlichungstag der Anmeldung: 27.12.2006
(73) Patentinhaber: MAN Nutzfahrzeuge Aktiengesellschaft, 80976 München (DE)
(72) Erfinder: Hohaus, Christian, Dipl.-Ing., 94405 Landau/Isar (DE); Kirsamer, Jörg, Dipl.-Ing., 72574 Bad Urach (DE)

(56) Entgegenhaltungen:
- EP-A1- 0 565 249
- EP-A2- 1 236 594
- EP-A2- 1 291 213
- DE-A1- 2 724 019
- DE-A1- 3 818 224
- DE-A1- 19 832 873
- DE-C1- 19 853 767
- FR-A1- 2 701 685
- US-A- 379 995
- US-A1- 2003 006 349

## Beschreibung

### Technisches Gebiet:

Die Erfindung betrifft ein Nutzfahrzeug, insbesondere Omnibus, mit einem Fahrzeugdach, das über wenigstens eine Dachluke und über zumindest eine aufgesetzte oder dachintegrierte Funktionseinheit verfügt.

### Stand der Technik:

Bei den heute bekannten Nutzfahrzeugen werden auf den Fahrzeugdächem Dachluken als eigenständiges Bauteil aufgebaut. Dies geschieht vor allem auch bei Omnibussen, die häufig über zwei oder insbesondere bei Gelenkbussen sogar mehr Dachluken verfügen. Die hierbei verwendeten Dachluken sind entweder elektrisch oder manuell zu öffnen, wobei das Offnen der Luken der Außenluftzufuhr oder der Entlüftung des Fahrzeugs dient. Ferner erfüllen die Dachluken oftmals die Funktion eines Notausstiegs. Insbesondere für Omnibusse existieren teilweise gesetzliche Vorschriften, die die Verwendung von Dachluken als Notausstieg vorschreiben. Darüber hinaus ist es bekannt, dass neben Dachluken auch für den Betrieb oder die Klimatisierung bzw. Energieversorgung des Nutzfahrzeugs benötigte Komponenten auf dem Dach montiert werden.

So beschreibt die DE 44 15 130 C1 etwa eine Klimaanlage zur Aufdachmontage bei Fahrzeugen. Die Klimaanlage wird mit Hilfe einer Tragstruktur, die zusätzliche Abdeckelemente aufweist, auf dem Dach montiert.

Darüber hinaus ist aus der DE 103 06 872 A1 ein gasbetriebener Bus mit auf dem Dach angeordneten Gasbehältern bekannt. In jedem Fall wird die Dachkonstruktion bei den vorgenannten technischen Lösungen derart verstärkt ausgeführt, dass die zusätzlich auf dem Dach vorgesehenen Aggregate keine Gefahr für die Stabilität des Fahrzeugs darstellen.

Schließlich ist aus der DE 38 18 224 A1 eine Befestigungsvorrichtung zur erleichterten Aufdachmontage für Fahrzeug-Klimaanlagen bekannt, die ein flexibles, zusammendrückbares Dichtelement hat, das zwischen dem Boden der Klimaanlage und die Dachöffnung umgebend angeordnet ist. Durch Anspressen des Dichtungselements während der Befestigung der zur Aufdachmontage bestimmten Klimaanlage, wird das Dichtelement mit einem Anpressdruck beaufschlagt und zwischen dem Boden der Klimaanlage und der Außenfläche der Dachhaut zusammengedrückt, so dass die zur Verbindung mit den Luftschächten des Fahrzeugs dienenden Dachöffnungen zuverlässig zur umgebung hin abgedichtet sind. Die DE 3 818 224 A1 offenbart ein Nutzfahrzeug nach dem Oberbegriff des Anspruchs 1.

Die Tendenz, zusätzlich benötigte Aggregate auf das Dach zu verlagern, ist vor allem dadurch zu erklären, dass, insbesondere bei Stadtlinienbussen, immer häufiger Niederflurbusse eingesetzt werden, die im unteren Bereich des Fahrzeugchassis nur wenig Platz für Fahrzeugkomponenten bieten, gleichzeitig aber auch der Bedarf an einem möglichst großen Nutzvolumen besteht. Würden zusätzlich benötigte Komponenten, wie Klimaanlage, Gastanks oder Antriebsaggregate im Bereich des Heckmotors eingebaut, würde ein teilweise erheblicher Anteil des Nutzvolumens der Fahrzeuge verloren gehen.

Nachteilig bei der Anordnung zusätzlicher Fahrzeugkomponenten auf dem Dach ist allerdings, dass Wartungs- oder Reparaturarbeiten entweder auf dem Dach ausgeführt oder die entsprechenden Aggregate zunächst vom Dach abgebaut werden müssen. Auch das Nachfüllen von Betriebsstoffen, wie Schmier- oder Kältemittel erfolgt in aller Regel auf dem Dach. Hierzu muss das Servicepersonal über außen am Fahrzeug aufgestellte Leitern oder spezielle Gestelle zum Fahrzeugdach aufsteigen, um die Wartungs- oder Reparaturpunkte zu erreichen. Dies bedeutet zum einen eine erhebliche Unfallgefahr für das Servicepersonal, zum anderen aber auch einen zusätzlichen Arbeits- und Zeitaufwand. Ferner besteht die Gefahr, dass die Fahrzeugkarosserie durch das Anstellen von Leitern oder herab fallendes Werkzeug beschädigt wird.

Ausgehend von dem vorgenannten Stand der Technik liegt der Erfindung die Aufgabe zugrunde ein Nutzfahrzeug mit für eine Aufdachmontage vorgesehenen Funktionseinheiten derart weiterzubilden, dass eine sichere Wartung und Reparatur der Funktionseinheiten möglich ist. Vor allem sollen hierbei die Wartungs- und Reparaturpunkte einfach und schnell für das Servicepersonal zu erreichen sein.

Die zuvor genannte Aufgabe wird mit einem Nutzfahrzeug, das die in Anspruch 1 aufgeführten Merkmale aufweist, gelöst. Vorteilhafte Ausführungsformen sind den abhängigen Ansprüchen zu entnehmen und werden in der nachfolgenden Beschreibung unter Bezugnahme auf die Figuren näher erläutert.

Erfindungsgemäß ist ein Nutzfahrzeug, insbesondere ein Omnibus, mit einem Fahrzeugdach, das über eine mit einer Dachluke verschließbare Dachöffnung und über zumindest eine aufgesetzte oder dachintegrierte Funktionseinheit verfügt, derart weitergebildet, dass die Dachöffnung zumindest abschnittsweise von der Funktionseinheit umgeben ist, wobei die Funktionseinheit in Reichweite der Dachöffnung angeordnet ist. Unter Reichweite ist in diesem Zusammenhang zu verstehen, dass eine Person durchschnittlicher Größe, deren Schultern sich oberhalb der Dachöffnung befinden, bequem zumindest eine Öffnungen bzw. Wartungspunkt der Funktionseinheit mit der Hand erreichen kann.

Vorzugsweise umgibt die Funktionseinheit die Dachöffnung vollumfänglich. Dies bedeutet, dass bei einer zumindest annähernd rechteckig ausgeführten Dachöffnung die Dachöffnung an vier Seiten von der Funktionseinheit umgeben ist. Genauso ist es aber auch denkbar, dass die Funktionseinheit in Reichweite zweier oder dreier Seitenkanten angeordnet ist.

Hierbei ist es sowohl möglich, die Funktionseinheit entlang der gesamten Länge einer Seitenkante oder nur entlang eines Abschnitts einer Seitenkante vorzusehen.

Genauso schließt die Erfindung auch die Anordnung einer Funktionseinheit um eine Dachöffnung ein, die keine rechteckförmige, sondern eine andere, etwa kreisförmige oder dreieckige Außenkontur aufweist. Wesentlich ist jeweils lediglich, dass die Funktionseinheit derart in Reichweite der Dachöffnung angeordnet ist, dass sie sich zumindest abschnittsweise entlang der Seitenkante bzw. der Seitenkanten erstreckt. Auf diese Weise wird die mit einer schwenk-, dreh- oder klappbar gelagerten Dachluke verschließbare Dachöffnung wenigstens Abschnittsweise von der Funktionseinheit umgeben.

In einer besonderen Ausführungsform weist die Funktionseinheit eine Tragstruktur mit einem Gehäuse auf. Hierbei ist die Tragstruktur in den Dachaufbau integriert oder auf das Dach montiert, während das Gehäuse eine Abdeckung der Funktionseinheit nach außen darstellt. Weiterhin ist nicht nur die Dachöffnung räumlich in die Funktionseinheit integriert, sondern auch die Steuerung der Dachluke mit dem Betrieb der Funktionseinheit gekoppelt. In diesem Zusammenhang ist es etwa denkbar, dass das Öffnen bzw. Schließen der Dachluke in Abhängigkeit der Betriebsweise und / oder des Betriebszustandes der Funktionseinheit erfolgt.

In der Erfindung weist die Funktionseinheit eine Klima-, Heiz- und/oder Lüftungsanlage auf, die die mit einer Dachluke verschließbare Dachöffnung umgibt. Hierbei ist die Dachöffnung mit Dachluke nicht nur räumlich, sondern auch die Regelung bzw. Steuerung der Dachluke mit der Regelung bzw. Steuerung der Klimaanlage gekoppelt. Auf diese Weise ist es möglich, die Aufdachklima-, Aufdachheiz-und/oder Aufdachlüftungsanlage in ihrem konstruktiven Aufbau wesentlich einfacher zu gestalten, da die üblicherweise benötigten Außenluft- bzw. Umluftklappen entfallen können. Die Funktion der Außenluft- bzw. Umluftklappen wird bei dieser speziellen Ausführungsform der Erfindung von der integrierten Dachluke wahrgenommen.

Eine vorteilhafte Gestaltung einer in die Aufdachklimaanlage integrierten Dachluke sieht vor, dass die Steuerung der Klima-, Heiz- und/oder Lüftungsanlage je nach Anforderung auch den Betätigungsmechanismus der Dachluke steuert. In einer ganz besonderen Weiterbildung ist der Öffnungsgrad der Dachluke hierbei entweder zweistufig, also entweder mit 100% Umluft oder mit 100 % Außenluft oder stufenlos ausgeführt. Hierbei ist es ebenso denkbar, die Kippstellung der Dachluke mittels der Steuerung derart zu variieren, dass die Dachluke entweder nach vorne oder nach hinter gekippt ist oder aber die Dachluke zumindest annähernd parallel zum Fahrzeugdach verfahren, also angehoben oder abgesenkt, bzw. festgestellt wird.

In jedem Fall ist eine leichte Zugänglichkeit zu der auf dem Dach montierten Funktionseinheit bzw. Klimaanlage vom Fahrgastinnenraum aus gegeben. Auf diese Weise wird eine einfach und sichere Wartung einer aufdachmontierten Funktionseinheit ermöglicht und gleichzeitig der Platzbedarf für entsprechende Fahrzeugkomponenten im Bereich des Motor- oder Fahrgastraums minimiert. Ferner stellt die erfindungsgemäße Lösung der Integration einer Dachöffnung mit Dachluke in eine Funktionseinheit keine Beeinträchtigung der Funktion einer Dachluke als Notausstieg dar.

Eine weitere, spezielle Ausführungsform der Erfindung sieht vor, dass die Funktionseinheit über eine Treibstoffversorgungseinheit verfügt. Vorzugsweise handelt es sich hierbei um eine Gasversorgungseinheit. Durch die Integration der Dachöffnung mit Dachluke in die Gasversorgungseinheit, etwa in die aus Gasflaschen bestehende Tankeinheit, kann der Platzbedarf auf dem Dach insgesamt minimiert werden.

Genauso ist es denkbar, dass die Funktionseinheit andere Fahrzeugkomponenten, wie etwa elektrische Komponenten (beispielsweise Elektromotor, Transformator, Wechsel- bzw. Gleichrichter), zumindest Teile einer Brennstoffzellenanlage (beispielsweise Stacks, Reformer oder Gasreinigungsstufen) oder auch Einrichtungen zur Brandbekämpfung aufweist.

Bei jeder der vorgenannten technischen Lösungen ist der erfindungswesentliche Gedanke in der räumlichen sowie vorzugsweise auch steuerungs- und / oder regelungstechnischen Integration einer Dachöffnung mit Dachluke in eine auf dem Fahrzeugdach vorgesehene Funktionseinheit zu sehen. Durch diese Anordnung lassen sich Wartungskosten an den auf dem Dach befindlichen Aggregaten, insbesondere einer Klima-, Heiz- und/oder Lüftungsanlage, reduzieren, weil sicherheitstechnische Einrichtungen, wie etwa Absturzsicherungen, bei der Wartung oder Reparatur entfallen können. Darüber hinaus wird der auf dem Dach in Fahrzeuglängsrichtung benötigte Bauraum reduziert.

Die Erfindung betrifft Nutzfahrzeuge, also vor allem Fahrzeuge die zum einen ausreichend Dachfläche bieten, bei denen zum anderen aber auch eine aerodynamische Gestaltung nicht derart im Vordergrund steht, wie bei Personenkraftwagen. Besonders eignet sich die Integration von Dachöffnungen mit Dachluke in Funktionseinheiten für Omnibusse, also sowohl für Stadtlinien- und Überlandbusse als auch für Reisebusse. Vorteilhaft hierbei ist, dass sich Omnibusse durch ihre großen Dachflächen auszeichnen, auf denen häufig Funktionseinheiten, insbesondere Klimaanlagen, vorgesehen sind.

Im Folgenden wird die Erfindung ohne Beschränkung des allgemeinen Erfindungsgedankens anhand von Ausführungsbeispielen unter Bezugnahme auf die Figuren näher erläutert. Es zeigen:
- Figur 1:: Omnibus mit in die Aufdach-Klimaanlage integrierter Dachluke
- Figur 2:: Schnittdarstellung einer Aufdach-Klimaanlage mit integrierter, geschlossener Dachluke
- Figur 3:: Schnittdarstellung einer Aufdach-Klimaanlage mit integrierter, geöffneter Dachluke

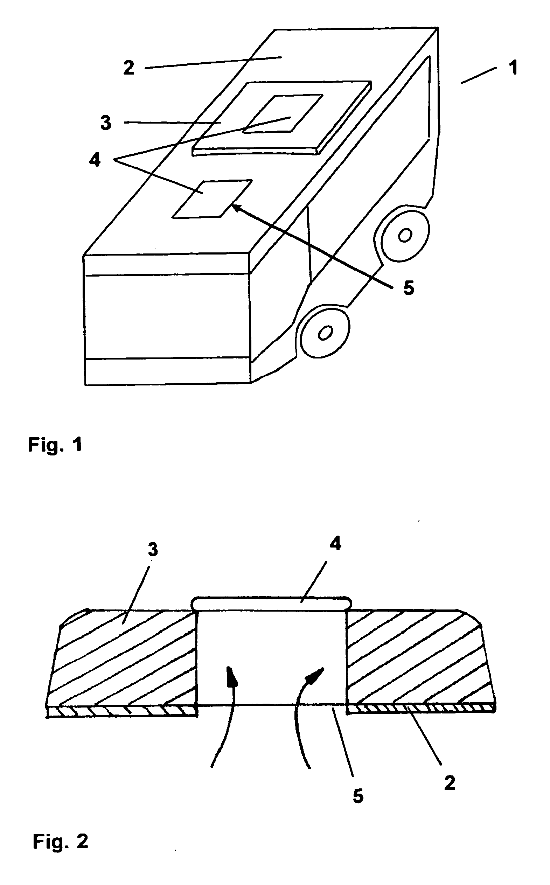

Figur 1 zeigt ein als Omnibus ausgeführtes Nutzfahrzeug 1. Auf dem Fahrzeugdach 2 ist eine Funktionseinheit 3 vorgesehen, die eine Klimaanlage zur Klimatisierung des Fahrgastraums aufweist. Ferner sind auf dem Fahrzeugdach 3 zwei Dachluken 4 vorgesehen, mittels der Dachöffnungen zum Zwecke der Be- oder Entlüftung des Fahrgastraums freizugeben bzw. zu verschließen sind. Bei dem in Figur 1 gezeigten Ausführungsbeispiel sind die Dachluken 4 in geschlossenem Zustand.

Die hintere der beiden Dachluken 4 ist in die Funktionseinheit 3 mit Klimaanlage integriert. Auf diese Weise wird der in Fahrzeuglängsrichtung benötigte Bauraum für Funktionseinheit 3 und Dachluken 4 minimiert.

Die Wartungspunkte der Funktionseinheit 3 mit Klimaanlage befinden sich von der hinteren Dachluke 4 aus in der Reichweite, so dass beispielsweise Kühlmittel nachgefüllt oder Reparaturen vom Fahrgastinnenraum aus durchgeführt werden können.

Die Figur 2 zeigt eine Schnittdarstellung einer Funktionseinheit 3 mit Klimaanlage, in die eine mittels einer Dachluke 4 verschließbare Dachöffnung 5 integriert ist. Die Funktionseinheit 3 ist auf dem Fahrzeugdach 2 montiert. Die Steuerung des Betätigungsmechanismusses der Dachluke ist in die elektronische Mess-, Steuer- und Regelungseinheit der Klimaanlage integriert. In dem in Figur 2 dargestellten Beispiel wird die Klimaanlage im Umluftbetrieb betrieben. Dies bedeutet, dass bei einer Klimatisierung des Fahrzeuginnenraums warme Luft aus dem Fahrgastraum über die gegen die Umgebung verschlossene Dachöffnung 5 in die Klimaanlage angesaugt, dort entfeuchtet und gekühlt und schließlich wieder in den Fahrgastraum eingeblasen wird.

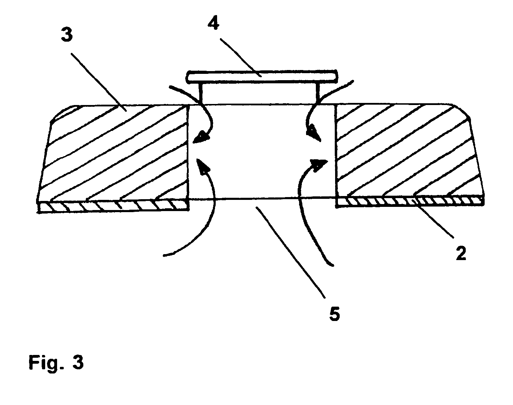

Figur 3 zeigt die gleiche Anordnung einer Funktionseinheit 3 mit Klimaanlage auf einem Fahrzeugdach 2 wie Figur 2 und ebenso in einer Schnittdarstellung. In diesem Fall ist die in die Funktionseinheit 3 integrierte Dachluke allerdings geöffnet, so dass von der Klimaanlage sowohl warme Luft aus dem Fahrgastraum als auch Frischluft aus der Umgebung angesaugt, aufbereitet und in den Fahrgastraum eingeblasen wird. Die Steuerung der Dachluke ist auch in diesem Fall in die zentrale Mess-, Steuer- und Regelungseinheit der Klimaanlage integriert, so dass die Dachluke nicht nur räumlich, sondern auch steuer- bzw. regelungstechnisch in die Klimaanlage integriert ist.

Bei der Steuerung der Dachluke sind unterschiedliche Varianten denkbar. In Abhängigkeit der Betriebsweise einer Klimaanlage kann die Öffnung der Dachluke entweder zweistufig, also geschlossen oder geöffnet, wobei die Klimaanlage entweder in seinem Umluft- oder Außenluftbetrieb betrieben wird, oder auch stufenlos ausgeführt sein.

### Bezugszeichenliste

- 1: Nutzfahrzeug
- 2: Fahrzeugdach
- 3: Funktionseinheit
- 4: Dachluke
- 5: Dachöffnung

## Patentansprüche

1. Nutzfahrzeug, inbesondere Omnibus, mit einem Fahrzeugdach (2), das über wenigstens eine mit einer Dachluke (4) verschließbare Dachöffnung (5) und über zumindest eine aufgesetzte Funktionseinheit (3) verfügt, wobei die Dachöffnung (5) zumindest abschnittsweise von der Funktionseinheit (3) umgeben ist,
**dadurch gekennzeichnet, dass** die Funktionseinheit (3) eine Klimaanlage aufweist und eine Steuerung der wenigstens einen Dachluke derart an die Mess-, Steuer- und Regelungseinheit der Klimaanlage gekoppelt ist, dass die wenigstens eine Dachluke (4) eine Umluft- und/oder Außenluftklappe der Klimaanlage bildet.

2. Nutzfahrzeug, in besondere Omnibus, nach Anspruch 1,
**dadurch gekennzeichnet, dass** die Funktionseinheit (3) eine Tragstruktur mit einem Gehäuse aufweist.

3. Nutzfahrzeug, inbesondere Omnibus, nach Anspruch 1 oder 2,
**dadurch gekennzeichnet, dass** die Funktionseinheit (3) über eine Treibstoffversorgungseinheit verfügt.

4. Nutzfahrzeug, inbesondere Omnibus, nach Anspruch 3,
**dadurch gekennzeichnet, dass** die Treibstoffversorgungseinheit als eine Gasversorgungseinheit ausgeführt ist.

5. Nutzfahrzeug, inbesondere Omnibus, nach einem der Ansprüche 1 bis 4,
**dadurch gekennzeichnet, dass** die Funktionseinheit (3) zumindest einen Teil einer elektrische Nutzfahrzeugantriebseinheit aufweist.

6. Nutzfahrzeug, inbesondere Omnibus, nach einem der Ansprüche 1 bis 5,
**dadurch gekennzeichnet, dass** die Funktionseinheit (3) über eine Brennstoffzellenanlage verfügt.

7. Nutzfahrzeug, inbesondere Omnibus, nach einem der Ansprüche 1 bis 6,
**dadurch gekennzeichnet, dass** die Funktionseinheit (3) über eine Brandbekämpfungseinrichtung verfügt.

## Claims

1. Commercial vehicle, in particular bus, with a vehicle roof (2) which has at least one roof opening (5), which can be closed with a roof hatch (4), and at least one attached functional unit (3), wherein the roof opening (5) is surrounded at least in sections by the functional unit (3),
**characterised in that** the functional unit (3) has an air conditioning system, and a controller of the at least one roof hatch is coupled to the instrumentation and control unit of the air conditioning system in such a manner that the at least one roof hatch (4) forms an air circulation and/or outside air flap of the air conditioning system.

2. Commercial vehicle, in particular bus, according to claim 1,
**characterised in that** the functional unit (3) has a support structure with a housing.

3. Commercial vehicle, in particular bus, according to claim 1 or 2,
**characterised in that** the functional unit (3) has a propellant supply unit.

4. Commercial vehicle, in particular bus, according to claim 3,
**characterised in that** the propellant supply unit is configured as a gas supply unit.

5. Commercial vehicle, in particular bus, according to one of claims 1 to 4,
**characterised in that** the functional unit (3) has at least part of an electrical commercial vehicle drive unit.

6. Commercial vehicle, in particular bus, according to one of claims 1 to 5,
**characterised in that** the functional unit (3) has a fuel cell system.

7. Commercial vehicle, in particular bus, according to one of claims 1 to 6,
**characterised in that** the functional unit (3) has a fire-fighting device.

## Revendications

1. Véhicule industriel, en particulier bus, avec un pavillon de véhicule (2) qui dispose au moins d'une ouverture de pavillon (5) obturable au moyen d'une trappe de pavillon (4) et au moins d'un bloc fonctionnel (3) posé, auquel cas l'ouverture de pavillon (5) est entourée au moins par section par le bloc fonctionnel (3), **caractérisé en ce que** le bloc fonctionnel (3) présente une installation de climatisation et une commande d'au moins une trappe de pavillon est couplée à l'unité de mesure, de commande et de régulation de l'installation de climatisation de telle manière qu'au moins une trappe de pavillon (4) forme une trappe de recyclage d'air et/ou d'alimentation en air extérieur de l'installation de climatisation.

2. Véhicule industriel, en particulier bus, selon la revendication 1, **caractérisé en ce que** le bloc fonctionnel (3) présente une structure porteuse avec un carter.

3. Véhicule industriel, en particulier bus, selon la revendication 1 ou 2, **caractérisé en ce que** le bloc fonctionnel (3) dispose d'une unité d'approvisionnement en combustible.

4. Véhicule industriel, en particulier bus, selon la revendication 3, **caractérisé en ce que** l'unité d'approvisionnement en combustible est conçue comme unité d'approvisionnement en gaz.

5. Véhicule industriel, en particulier bus, selon l'une des revendications 1 à 4, **caractérisé en ce que** le bloc fonctionnel (3) présente au moins une partie d'une unité de propulsion électrique pour véhicule industriel.

6. Véhicule industriel, en particulier bus, selon l'une des revendications 1 à 5, **caractérisé en ce que** le bloc fonctionnel (3) dispose d'une installation à pile à combustible.

7. Véhicule industriel, en particulier bus, selon l'une des revendications 1 à 6, **caractérisé en ce que** le bloc fonctionnel (3) dispose d'un dispositif de lutte contre l'incendie.
